# EUROPEAN PATENT APPLICATION

(11) **EP 1 327 543 A1**
(43) Date of publication of application: **16.07.2003**
(21) Application number: 01974688.2
(22) Date of filing: 04.10.2001
(51) Int. Cl.: B60H 1/32, F04B 35/00

(54) **POWER GENERATION AND ACTUATING SYSTEM**

(30) Priority: 17.10.2000 JP 2000316797
(71) Applicant: Kabushiki Kaisha Toyota Jidoshokki, Kariya-shi, Aichi-ken 448-8671 (JP)
(72) Inventor: SUITOU, Ken, c/o K.K. TOYOTA JIDOSHOKKI, Kariya-shi, Aichi 448-8671 (JP); KIMURA, Kazuya, c/o K.K. TOYOTA JIDOSHOKKI, Kariya-shi, Aichi 448-8671 (JP); KAWAGUCHI, Masahiro, c/o K.K. TOYOTA JIDOSHOKKI, Kariya-shi, Aichi 448-8671 (JP); ODACHI, Yasuharu, c/o K.K. TOYOTA JIDOSHOKKI, Kariya-shi, Aichi 448-8671 (JP); IEOKA, Shoichi, c/o K.K. TOYOTA JIDOSHOKKI, Kariya-shi, Aichi 448-8671 (JP); HAYASHI, Hirohito, c/o K.K. TOYOTA JIDOSHOKKI, Kariya-shi, Aichi 448-8671 (JP)
(74) Representative: Leson, Thomas Johannes Alois, Dipl.-Ing.
(86) International application number: JP0108754
(87) International publication number: WO02032706

(57) **Abstract**

In a generator and motor system of the present invention, when an engine is running, a rotational apparatus is driven by power from the engine and a motor generator is driven to generate power, and when the engine is stopped, the motor generator is put in motion by power supply from the outside to drive the rotational apparatus. The system includes a mechanical power transmission mechanism for transmitting power of the engine to the motor generator and the rotational apparatus. The power transmission mechanism permits power transmission from the engine to the motor generator and the rotational apparatus, and prevents power transmission from the motor generator to the engine.

## Description

### TECHNICAL FIELD

The present invention relates to a generator and motor system. More specifically, according to the system, when an engine of a vehicle is running, power transmission from the engine drives a motor generator, which in turn generates power, and a compressor of an air-conditioner. When the engine is stopped, the motor generator is put in motion by power supply from the outside to drive the compressor.

### BACKGROUND ART

Japanese Laid-Open Utility Model Publication No. 6-87678 discloses such system. That is, a rotary shaft of a compressor is coupled to a rotary shaft of a motor generator to rotate integrally with each other. An electromagnetic clutch is located in a power transmission path between the rotary shafts and an engine.

When the electromagnetic clutch is turned on, the rotary shafts are connected to the engine. Thus, power is transmitted from the engine to the rotary shafts, which drives the motor generator and the compressor. When the engine is stopped, the electromagnetic clutch is turned off to discontinue power transmission among the motor generator, the compressor, and the engine. At this time, the motor generator is put in motion by power supply from the outside and drives the compressor.

However, in the conventional system, while transmitting power of the engine to the motor generator and the compressor, the electromagnetic clutch is electrically controlled from the outside to be turned on and off such that power of the motor generator is not transmitted to the engine. This not only complicates a controller of the system but also increases the power consumption of the system.

### DISCLOSURE OF THE INVENTION

Accordingly, it is an objective of the present invention to provide a generator and motor system that simplifies a controller of the system and reduces the power consumption of the system.

To achieve the above objective, the present invention provides a generator and motor system. When an engine is running, a rotational apparatus is driven by power from the engine, and a motor generator is driven to generate power. When the engine is stopped, the motor generator is put in motion by power supply from the outside to drive the rotational apparatus. The generator and motor system includes a mechanical power transmission mechanism for transmitting power of the engine to the motor generator and the rotational apparatus. The power transmission mechanism permits power transmission from the engine to the motor generator and the rotational apparatus, and prevents power transmission from the motor generator to the engine.

### BRIEF DESCRIPTION OF THE DRAWINGS

Fig. 1 is a cross-sectional view illustrating a generator and motor system according to a first embodiment;
Figs. 2(a) and 2(b) are enlarged partial cross-sectional views illustrating an operating state of a driven pulley and a one-way clutch;
Fig. 3 is a schematic view illustrating a generator and motor system according to a second embodiment; and
Fig. 4 is a schematic view illustrating a generator and motor system according to a third embodiment.

### BST MODE FOR CARRYING OUT THE INVENTION

A generator and motor system according to a first embodiment of the present invention will now be described. The generator and motor system is used in a vehicle.

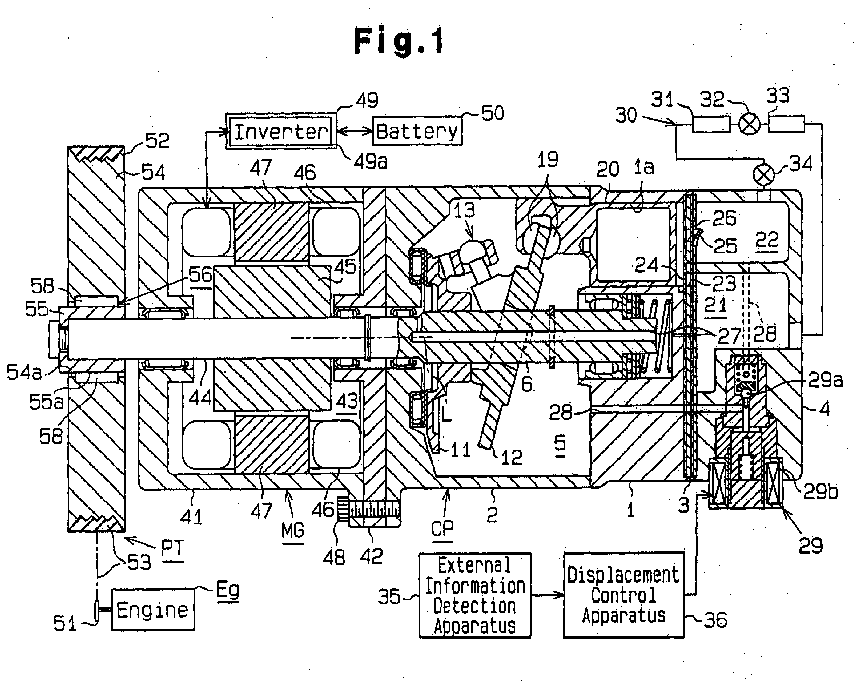

Fig. 1 shows a generator and motor system. A motor generator MG is operably coupled to a drive source of a vehicle, which is an engine Eg in the first embodiment, via a power transmission mechanism PT. A swash plate type variable displacement compressor (hereinafter, simply referred to as a compressor) CP is operably coupled to the engine Eg via the power transmission mechanism PT and the motor generator MG. The compressor CP is a rotational apparatus, which forms part of a refrigerant circuit of an air-conditioner. The compressor CP is operably coupled to the engine Eg downstream of the motor generator MG in a power transmission path.

The power transmission mechanism PT mechanically permits power transmission from the engine Eg to the motor generator MG and the compressor CP, and prevents power transmission from the motor generator MG to the engine Eg. Therefore, the power transmission mechanism PT can restrict the direction of the power transmission. More specifically, when the engine Eg is running, power transmission from the engine Eg drives the motor generator MG, which generates power, and the compressor CP, which compress refrigerant gas. When the engine Eg is stopped, power transmission among the motor generator MG, the compressor CP, and the engine Eg is discontinued. Meanwhile, the motor generator MG generates power by external power supply and drives the compressor CP.

As shown in Fig. 1, the motor generator MG includes a front housing member 41 and a rear housing member 42, which is secured to the rear end of the front housing member 41. The front housing member 41 and the rear housing member 42 form the housing assembly of the motor generator MG. The left side of Fig. 1 is referred to as the front side and the right side of Fig. 1 is referred to as the rear side.

The front housing member 41 and the rear housing member 42 define an accommodating chamber 43. A first rotary shaft 44 is rotatably supported inside the accommodating chamber 43. The first rotary shaft 44 is operably coupled to the engine Eg via the power transmission mechanism PT.

A magnet 45 is secured to the first rotary shaft. 44 inside the accommodating chamber 43 and rotates integrally with the first rotary shaft 44. Stator cores 47, each of which is wound by a coil 46, are fixed to the inner circumferential surface of the accommodating chamber 43 to surround the magnet 45.

A controller 49 of the motor generator MG includes an inverter 49a. The inverter 49a is located on a power supply path between the coils 46 of the motor generator MG and a battery 50. When the engine Eg is running, the controller 49 controls the motor generator MG to function as a generator. Alternate current generated by the motor generator MG is converted to direct current by the inverter 49a and supplied to the battery 50. When a passenger compartment needs to be cooled while the engine Eg is stopped, direct current drawn from the battery 50 is converted to alternate current by the inverter 49a and supplied to the motor generator MG. Thus, the motor generator MG functions as a motor to drive the compressor CP Therefore, the passenger compartment can be refrigerated although the engine Eg is stopped.

As shown in Fig. 1, the compressor CP includes a cylinder block 1, a front housing member 2, which is secured to the front end of the cylinder block 1, a rear housing member 4, which is secured to the rear end of the cylinder block 1 with a valve plate assembly 3 located in between. The cylinder block 1, the front housing member 2, and the rear housing member 4 form the housing assembly of the compressor CP. The compressor CP is secured to the rear end of the rear housing member 42 of the motor generator MG with the front end of the front housing member 2.

In the first embodiment, the front housing member 2 of the compressor CP is fastened to the front housing member 41 and the rear housing member 42 of the motor generator MG with a bolt 48. Therefore, the housing assembly of the compressor CP is easily detachable from the housing assembly of the motor generator MG.

A crank chamber 5 is defined in a region surrounded by the cylinder block 1 and the front housing member 2. A second rotary shaft 6 is rotatably arranged inside the crank chamber 5. The front end of the second rotary shaft 6 that projects from the front housing member 2 is directly coupled to the rear end of the first rotary shaft 44 of the motor generator MG along the same axis L by easily detachable means, such as an engagement of a recess and a projection or a bolt.

A lug plate 11 is secured to the second rotary shaft 6 in the crank chamber 5. The lug plate 11 rotates integrally with the second rotary shaft 6. A swash plate 12 is accommodated in the crank chamber 5. The swash plate 12 is slidably and pivotally supported by the second rotary shaft 6. A hinge mechanism 13 is located between the lug plate 11 and the swash plate 12. Therefore, the swash plate 12 rotates integrally with the lug plate 11 and the second rotary shaft 6. The swash plate 12 also slides along the axis L of the second rotary shaft 6 and inclines with respect to the second rotary shaft 6.

Cylinder bores 1a (only one shown) are formed in the cylinder block 1 to surround the second rotary shaft 6. A single headed piston 20 is accommodated in each cylinder bore 1a and reciprocates in the cylinder bore 1a. The front opening and the rear opening of each cylinder bore 1a are closed by the piston 20 and the valve plate assembly 3. A compression chamber, the volume of which varies in accordance with reciprocation of the piston 20, is defined in each cylinder bore 1a. Each piston 20 is coupled to the peripheral portion of the swash plate 12 by a pair of shoes 19. Therefore, when the swash plate 12 rotates with the second rotary shaft 6, the shoes 19 convert the rotation of the swash plate 12 into reciprocation of the pistons 20.

A suction chamber 21 and a discharge chamber 22 are defined between the valve plate assembly 3 and the rear housing member 4. When each piston 20 moves from the top dead center position to the bottom dead center position, refrigerant gas in the suction chamber 21 is drawn into the corresponding cylinder bore 1a via one of suction ports 23 and one of suction valves 24 formed in the valve plate assembly 3. When each piston 20 moves from the bottom dead center position to the top dead center position, refrigerant gas in the corresponding cylinder bore 1a is compressed to a predetermined pressure and is discharged to the discharge chamber 22 via one of discharge ports 25 and one of discharge valves 26 formed in the valve plate assembly 3.

As shown in Fig. 1, the refrigerant circuit of the air-conditioner includes the compressor CP and an external refrigerant circuit 30, which connects the discharge chamber 22 and the suction chamber 21 of the compressor CP at the outside the compressor CP. The external refrigerant circuit 30 includes a condenser 31, a decompression device, and an evaporator 33. The decompression device is an expansion valve 32 in this embodiment. A shutoff valve 34 is located on a refrigerant passage between the discharge chamber 22 of the compressor CP and the condenser 31 of the external refrigerant circuit. When the pressure in the discharge chamber 22 decreases below a predetermined value, the shutoff valve 34 disconnects the refrigerant passage from the compressor CP and stops circulation of refrigerant through the external refrigerant circuit 30.

As shown in Fig. 1, in the compressor CP, the inclination angle of the swash plate 12 can be set to an arbitrary angle between the maximum inclination angle (a state shown in Fig. 1) and the minimum inclination angle by adjusting the pressure in the crank chamber 5 using an electromagnetic control valve 29. The minimum inclination angle is not zero but in the vicinity of zero. The inclination angle of the swash plate 12 refers to the angle of the swash plate 12 with respect to a line that is perpendicular to the axis L of the second rotary shaft 6.

The crank chamber 5 and the suction chamber 21 are connected to each other by a bleed passage 27. The discharge chamber 22 and the crank chamber 5 are connected to each other by a supply passage 28. The electromagnetic control valve 29 is located on the supply passage 28. The position of a valve body 29a of the electromagnetic control valve 29, or the valve opening degree, is varied in accordance with the amount of power supply to a solenoid 29b from the outside. This controls the amount of pressurized discharge gas from the discharge chamber 22 to the crank chamber 5 through the supply passage 28. The pressure in the crank chamber 5 is determined in accordance with the relationship between the amount of refrigerant gas introduced to the crank chamber 5 and the amount of refrigerant gas sent out from the crank chamber 5 to the suction chamber 21 via the bleed passage 27. The difference between the pressure in the crank chamber 5 and the pressure in the cylinder bores 1a is changed in accordance with the change in the pressure in the crank chamber 5, which varies the inclination angle of the swash plate 12. As a result, the stroke of the pistons 20, that is, the displacement of the compressor CP is controlled.

For example, if the opening degree of the displacement control valve 29 is decreased, the pressure in the crank chamber 5 decreases, which decreases the difference between the pressure in the crank chamber 5 and the pressure in the cylinder bores 1a. Accordingly, the swash plate 12 is tilted to increase the inclination angle, which increases the displacement of the compressor CP. In contrast, when the opening degree of the displacement control valve 29 increases, the pressure in the crank chamber 5 increases, which increases the difference between the pressure in the crank chamber 5 and the pressure in the cylinder bores 1a. Accordingly, the swash plate 12 is tilted to decrease the inclination angle, which decreases the displacement of the compressor CP.

The opening degree of the displacement control valve 29 is controlled by a displacement control apparatus 36 based on information sent from an external information detection apparatus 35. The information includes the on-off state of the air-conditioner switch, the temperature of the passenger compartment, and a target temperature. Power is supplied to the solenoid 29b of the displacement control valve 29 and several electrical components on the vehicle, which are not shown, from the battery 50.

Particularly, when the engine Eg is running, upon detection of the off state of the air-conditioning switch or the cooling non-permitting state when the vehicle is rapidly accelerated, the displacement control apparatus 36 fully opens the electromagnetic control valve 29 to minimize the displacement of the compressor CP. Upon detection of the state in which refrigeration is not needed when the engine Eg is stopped, the motor generator MG is stopped.

When the displacement of the compressor CP is minimum, the pressure in the discharge chamber 22 becomes lower than the predetermined value. Thus, the shutoff valve 34 is closed and the discharge of refrigerant gas to the external refrigerant circuit 30 is stopped. As described above, since the minimum inclination angle of the swash plate 12 is not zero degrees, although the displacement of the compressor CP is minimized, refrigerant gas is drawn into the cylinder bores 1a from the suction chamber 21, compressed in the cylinder bores 1a, and discharged to the discharge chamber 22 from the cylinder bores 1a. Therefore, an internal refrigerant circuit is formed inside the compressor CP. The internal refrigerant circuit includes the cylinder bores 1a, the discharge chamber 22, the supply passage 28, the crank chamber 5, the bleed passage 27, the suction chamber 21, and the cylinder bores 1a. Lubricant circulates in the internal refrigerant circuit with refrigerant. Thus, although the compressor CP is operated in the minimum displacement, lubricant is supplied inside the compressor CP.

As shown in Fig. 1, the power transmission mechanism PT includes a drive pulley 51, a driven pulley 52, and a belt 53. The drive pulley 51 is fixed to the output shaft of the engine Eg. The driven pulley 52 is attached to the front end of a first rotary shaft 44, which projects from the front housing member 41 of the motor generator MG. The belt 53 is wound about the drive pulley 51 and the driven pulley 52.

The driven pulley 52 includes an outer ring 54, an inner ring 55, and a one-way clutch 56. The belt 53 is wound about the outer ring 54. The inner ring 55 is secured to the first rotary shaft 44 at the inner circumferential side of the outer ring 54. The inner ring 55 rotates integrally with the first rotary shaft 44. The one-way clutch 56 is located between the outer ring 54 and the inner ring 55. The one-way clutch 56 controls power transmission among the engine Eg, the motor generator MG, and the compressor CP.

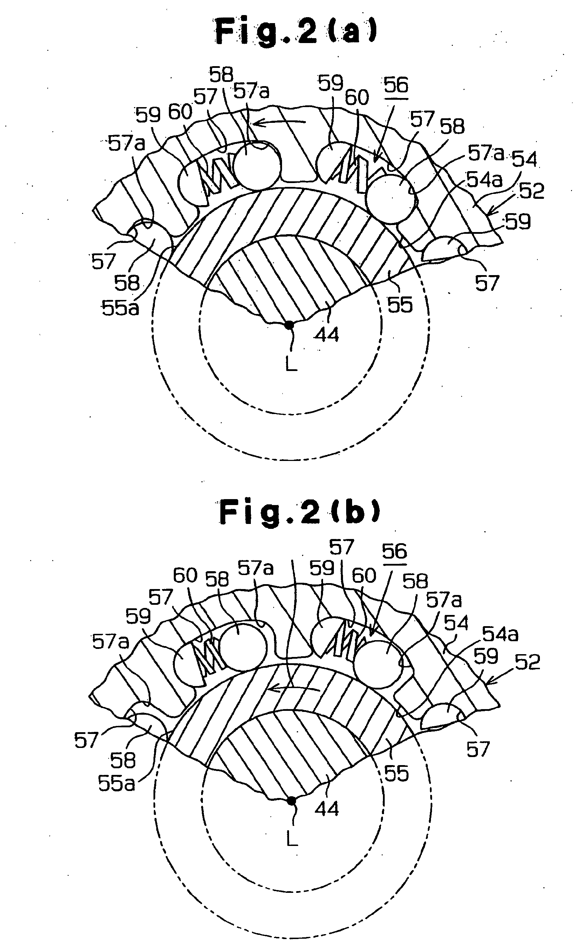

That is, as shown in Figs. 2(a) and 2(b), the inner circumferential surface 54a of the outer ring 54 surrounds the outer circumferential surface 55a of the inner ring 55. Accommodating recesses 57 are formed in the inner circumferential surface 54a of the outer ring 54 about the axis L at equal intervals. The outer ring 54 rotates counterclockwise as indicated by arrows in Fig. 2. A cam surface 57a is formed in each accommodating recess 57 at the trailing end of the outer ring 54. A roller 58 is accommodated in each accommodating recess 57. Each roller 58 is movable between a position (Fig. 2(a)) at which the roller 58 is engaged with the corresponding cam surface 57a and a position (Fig. 2(b)) at which the roller 58 is apart from the cam surface 57a. A spring seat 59 is located at the end opposite to the cam surface 57a inside each accommodating recess 57. A spring 60, which urges the roller 58 toward the cam surface 57a, is located between each spring seat 59 and the corresponding roller 58.

As shown in Fig. 2(a), when the outer ring 54 is rotated in the direction shown by the arrow by the power transmission from the engine EG, each roller 58 moves along the outer circumferential surface. 55a of the inner ring 55 to an engaging position with the corresponding cam surface 57a. When each roller 58 is engaged with the corresponding cam surface 57a, the inner ring 55 is rotated in the same direction as the outer ring 54 by the friction between the cam surface 57a and the roller 58, and the friction between the roller 58 and the outer circumferential surface 55a of the inner ring 55. Therefore, the power of the engine Eg is transmitted to the first and second rotary shafts 44, 6 via the one-way clutch 56. That is, when the engine Eg is running, the motor generator MG and the first and second rotary shafts 44, 6 of the compressor CP are always driven.

In contrast, as shown in Fig. 2(b), when the inner ring 55 is rotated counterclockwise as indicated by the arrow with the first rotary shaft 44 while the engine Eg is stopped, each roller 58 separates from the corresponding cam surface 57a against the force of the corresponding spring 60 based on the frictional force between the roller 58 and the inner ring 55. That is, the inner ring 55 runs idle with the outer ring 54. That is, although the first rotary shaft 44 is rotated counterclockwise by the motor generator MG that has been put in motion, power is prevented from being transmitted to the engine Eg.

The preferred embodiment provides the following advantages.

The power transmission mechanism PT permits power transmission from the engine Eg to the motor generator MG and prevents power transmission from the motor generator MG to the engine Eg. The power transmission mechanism PT restricts the direction of power transmission by a mechanical structure. Therefore, as compared to the conventional structure that achieves such function by an on-off control of an electromagnetic clutch, the preferred embodiment does not require the electromagnetic clutch or a controller for controlling the electromagnetic clutch. Thus, the structure of the system is simplified and the power consumption of the system is reduced.

The compressor CP and the motor generator MG are arranged in series. The rotary shafts 6, 44 are directly coupled to each other on the same axis L. Therefore, a belt or a pulley is not required for power transmission between the rotary shafts 6, 44, which simplifies the structure.

The second rotary shaft 6 of the compressor CP is coupled to the driven pulley 52 of the power transmission mechanism PT via the first rotary shaft 44 of the motor generator MG. Therefore, the second rotary shaft 6 is always driven when the engine Eg is running. However, the air-conditioner has the shutoff valve 34, which stops circulation of refrigerant via the external refrigerant circuit 30 when refrigeration is not needed and the displacement of the compressor CP is minimized. Therefore, refrigeration is not performed when not needed. Although the displacement of the compressor CP is minimized, lubricant is reliably circulated in the compressor CP. Therefore, although refrigerant that includes lubricant is not returned from the external refrigerant circuit 30, each sliding part, such as between the swash plate 12 and the shoes 19, is reliably lubricated.

In the air-conditioner of the preferred embodiment, an expensive and heavy electromagnetic clutch need not be located between the compressor CP and the motor generator MG. Therefore, the weight of a unit, which is formed of the compressor CP and the motor generator MG, is reduced. The unit is also provided at a low cost. Since no shock is caused by turning on and off the electromagnetic clutch, the driving performance of the vehicle is improved.

The compressor CP is operably coupled to the engine Eg downstream of the motor generator MG in the power transmission path. The housing assembly of the compressor CP is easily detachable from the housing assembly of the motor generator MG. The second rotary shaft 6 of the compressor CP is easily detachable from the first rotary shaft 44 of the motor generator MG. Therefore, the compressor CP is easily removed from the unit, which is formed of the compressor CP and the motor generator MG, for a vehicle that requires no refrigeration function.

A second embodiment of the present invention will now be described. The differences from the first embodiment will mainly be discussed below, and like or the same reference numerals are given to those components that are like or the same as the first embodiment.

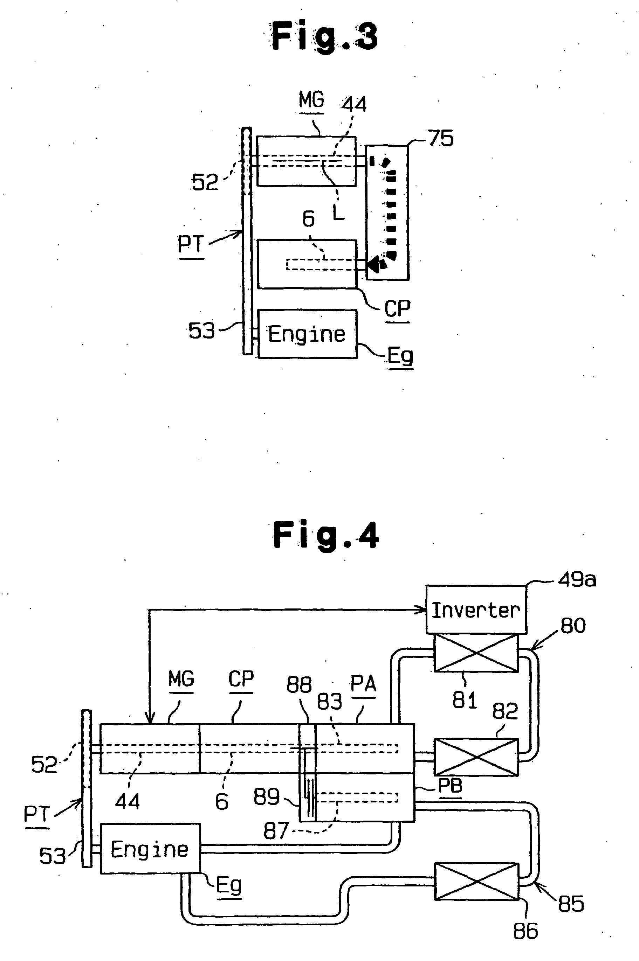

As shown in Fig. 3, in the second embodiment, the compressor CP and the motor generator MG are arranged in parallel with each other such that the shafts 6, 44 extends parallel to each other. Therefore, the length along the axis L of the unit, which is formed of the motor generator MG and the compressor CP, is shortened.

In the second embodiment, the first rotary shaft 44 of the motor generator MG and the second rotary shaft 6 of the compressor CP are operably coupled to each other by the transmission mechanism 75. The transmission mechanism 75 may be gear-type step transmission mechanism or belt-type continuously variable transmission mechanism. The transmission mechanism 75 allows the rotational speed ratio between the second rotary shaft 6 of the compressor CP and the first rotary shaft 44 of the motor generator MG to be arbitrarily changed.

Therefore, the valid rotational speed ranges of the compressor CP and the motor generator MG differ from each other. Thus, although a problem occurs when the compressor CP and the motor generator MG are directly coupled to each other (rotational speed ratio is 1 to 1), the transmission mechanism 75 can solve the problem by adjusting the rotational speed ratio of the compressor CP and the motor generator MG. This increases flexibility of combination of the compressor CP and the motor generator MG.

The transmission mechanism 75 may be designed such that the rotational speed ratio can be adjusted only when assembling the generator and motor system or during maintenance. The transmission mechanism 75 may also be designed such that the rotational speed ratio can be changed in accordance with the rotational speed of the engine Eg. In the latter case, although the rotational speed of the engine Eg is low, the second rotary shaft 6 of the compressor CP can be rotated at a high speed, which allows sufficient refrigeration. When the rotational speed of the engine Eg is high, the rotational speed of the second rotary shaft 6 can be reduced to protect the compressor CP.

A third embodiment of the present invention will now be described. The differences from the first embodiment will mainly be discussed below, and like or the same reference numerals are given to those components that are like or the same as the first embodiment.

As shown in Fig. 4, in the third embodiment, a cooling system 80 for cooling the inverter 49a of the controller 49 is provided. The cooling system 80 includes a first heat exchanger 81, a second heat exchanger 82, and a coolant circuit. The first heat exchanger 81 transmits heat generated in the inverter 49a to coolant. The second heat exchanger 82 radiates heat of the coolant. The coolant circuit includes a first pump PA, which is used for coolant circulation. When the first pump PA is operated to circulate coolant, the inverter 49a is cooled.

The air-conditioner includes a heater circuit 85, which utilizes cooling water heated by the engine Eg, that is, hot water. The heater circuit 85 includes a heat exchanger 86 and a hot water circuit. The heat exchanger 86 radiates heat from the hot water to the passenger compartment. The hot water circuit includes a second pump PB, which is used for hot water circulation. When the second pump PB is operated to circulate hot water, the passenger compartment is heated.

In the third embodiment, the first pump PA, which is used for coolant circulation, and the second pump PB, which is used for hot water circulation, form a rotational apparatus. The first pump PA is arranged in series with respect to the compressor CP. A rotary shaft 83 of the first pump PA is coupled to the rear end of the second rotary shaft 6 of the compressor CP by a power branching mechanism 88. The power branching mechanism 88 divides one input from the second rotary shaft 6 of the compressor CP into two outputs.

The second pump PB, which is used for hot water circulation, is arranged in parallel with the first pump PA, which is used for coolant circulation. The rotary shaft 87 of the second pump PB is coupled to the second rotary shaft 6 of the compressor CP by the power branching mechanism 88 and the clutch mechanism 89. When heating is unnecessary, the clutch mechanism 89 discontinues power transmission between the second pump PB and the second rotary shaft 6 of the compressor CP. This stops the second pump PB, which is used for hot water circulation, and suppresses unnecessary heating.

As described above, in the case in which the rotational apparatuses CP, PA, PB are operably coupled to the motor generator MG, a power source for each rotational apparatus CP, PA, or PB need not be provided for the state in which the engine Eg is stopped. Thus, the entire apparatus is manufactured at a low cost.

It should be apparent to those skilled in the art that the present invention may be embodied in many other specific forms without departing from the spirit or scope of the invention. Particularly, it should be understood that the invention may be embodied in the following forms.

The one-way clutch need not be a roller type but may be a sprag type or a ratchet type.

The one-way clutch 56 may be incorporated in the drive pulley 51 instead of the driven pulley 52.

In the above embodiments, the rotational apparatuses CP, PA, PB are operably coupled to the engine Eg downstream of the motor generator MG in the power transmission path. However, the rotational apparatuses CP, PA, PB may be coupled to the engine Eg at upstream of the motor generator MG. For example, in the first embodiment, the position of the compressor CP and the motor generator MG may be reversed. Then, the driven pulley 52 may be attached to the front end of the second rotary shaft 6 of the compressor CP and the first rotary shaft 44 of the motor generator MG may be coupled to the rear end of the second rotary shaft 6.

In the above embodiments, a torque limiter may be located on the power transmission path between the engine Eg and the rotational apparatuses CP, PA, PB. In this case, when the load torque of the rotational apparatuses CP, PA, PB becomes excessive due to, for example, dead lock, while the engine Eg is running, the excessive load torque is prevented from affecting the engine Eg. Particularly, when the torque limiter is located on the power transmission path between the motor generator MG and the rotational apparatuses CP, PA, PB, the motor generator MG generates power even at its torque limit.

In the above embodiments, a clutch mechanism, such as an electromagnetic clutch, may be located on the power transmission path between the motor generator MG and the compressor CP. In this case, when refrigeration is not needed while the engine Eg is running, the compressor CP is stopped by the operation of the clutch mechanism. Thus, a structure for a clutchless compressor CP such as the shutoff valve 34 can be omitted.

The rotational apparatus may be any apparatus that operates in accordance with input of rotational force from the outside. For example, the rotational apparatus includes a hydraulic pump for a brake assist system, a hydraulic pump for a power steering apparatus, an air pump for an air suspension system, and a pump for coolant circulation of a cooling system for cooling the motor generator MG or the battery 50.

The generator and motor system of the present invention may be applied to watercrafts.

## Claims

1. A generator and motor system, wherein, when an engine is running, a rotational apparatus is driven by power from the engine, and a motor generator is driven to generate power, and wherein, when the engine is stopped, the motor generator is put in motion by power supply from the outside to drive the rotational apparatus, the generator and motor system being **characterized by**:
a mechanical power transmission mechanism for transmitting power of the engine to the motor generator and the rotational apparatus, wherein the power transmission mechanism permits power transmission from the engine to the motor generator and the rotational apparatus, and prevents power transmission from the motor generator to the engine.

2. The generator and motor system according to claim 1, **characterized in that** the power transmission mechanism includes a one-way clutch.

3. The generator and motor system according to claim 1 or 2, **characterized in that** the rotational apparatus and the motor generator are arranged in series.

4. The generator and motor system according to claim 1 or 2, **characterized in that** the rotational apparatus and the motor generator are arranged in parallel.

5. The generator and motor system according to any one of claims 1 to 4, **characterized in that** the rotational apparatus is a compressor, wherein the compressor forms an air-conditioner.

6. The generator and motor system according to claim 5, **characterized in that** a rotary shaft of the compressor is coupled to the power transmission mechanism, wherein the rotary shaft is always driven when the engine is running.

7. The generator and motor system according to any one of claims 1 to 6, **characterized in that** a controller for controlling power generation and motion of the motor generator is electrically connected to the motor generator, wherein the controller includes a cooling system for cooling the controller by circulating coolant, and wherein a pump for coolant circulation located in the cooling system forms the rotational apparatus.

8. The generator and motor system according to any one of claims 1 to 7, **characterized in that** the rotational apparatus is coupled to the engine downstream of the motor generator in a power transmission path, which extends from the engine to the motor generator and the rotational apparatus.

9. The generator and motor system according to claim 2, **characterized in that** the power transmission mechanism includes a drive pulley, which is located on the engine, a driven pulley, which is located on the motor generator or the rotational apparatus, and a winding member, which is wound about the drive pulley and the driven pulley, wherein the winding member transmits rotation of the drive pulley to the driven pulley, and wherein the one-way clutch is incorporated in the drive pulley or the driven pulley.

10. The generator and motor system according to claim 3, **characterized in that** the motor generator and the rotational apparatus each includes a rotary shaft, wherein the rotary shafts are directly coupled to each other.

11. The generator and motor system according to claim 4, **characterized in that** the motor generator and the rotational apparatus each includes a rotary shaft, wherein the rotary shafts are coupled to each other by a transmission mechanism.
